# EUROPÄISCHE PATENTSCHRIFT

(11) **EP 2 411 242 B1**
(45) Veröffentlichungstag und Bekanntmachung des Hinweises auf die Patenterteilung: **10.02.2016**
(21) Anmeldenummer: 10712711.0
(22) Anmeldetag: 26.03.2010
(51) Int. Cl.: B60N 2/16, B60N 2/42, B60N 2/44

(54) **FAHRZEUGSITZ MIT EINEM HÖHENVERSTELLER**
MOTOR VEHICLE SEAT COMPRISING A HEIGHT ADJUSTER
SIÈGE DE VÉHICULE AVEC DISPOSITIF DE RÉGLAGE EN HAUTEUR

(30) Priorität: 27.03.2009 DE 102009014651
(43) Veröffentlichungstag der Anmeldung: 01.02.2012
(73) Patentinhaber: Johnson Controls GmbH, 51399 Burscheid (DE)
(72) Erfinder: HAIDA, Stefan, 42855 Remscheid (DE); SCHULZ, Dirk, 42899 Remscheid (DE)
(74) Vertreter: Wolff, Felix
(86) Internationale Anmeldenummer: PCT/EP2010/001913
(87) Internationale Veröffentlichungsnummer: WO 2010/108691

(56) Entgegenhaltungen:
- WO-A1-01/81113
- WO-A1-2004/056605
- DE-A1- 10 350 153
- DE-A1- 19 847 081
- DE-A1-102007 039 862
- DE-C1- 10 052 089
- US-A1- 2003 116 689

## Beschreibung

Die vorliegende Erfindung betrifft einen Fahrzeugsitz mit einem Sitzversteller und einem Antriebsmittel, das im Betriebsfall den Sitzversteller antreibt.

Derartige Fahrzeugsitze sind aus dem Stand der Technik (z.B. Dokument DE 19847081) hinlänglich bekannt. Bei diesen Sitzverstellern handelt es sich beispielsweise um einen motorisch insbesondere jedoch manuell antreibbaren Höhenversteller. Die Fahrzeugsitze nach dem Stand der Technik weisen jedoch den Nachteil auf, dass es beispielsweise bei einem Unfall zu einer Überlastsituation kommen kann, bei der der Sitzversteller beschädigt wird und/oder bei dem sich der Fahrzeuginsasse insbesondere an dem Antriebsmittel des Sitzverstellers verletzt.

Es ist deshalb die Aufgabe der vorliegenden Erfindung einen Fahrzeugsitz zur Verfügung zu stellen, der die Nachteile des Standes der Technik nicht aufweist. Gelöst wird die Aufgabe mit einem Fahrzeugsitz mit einem Sitzversteller und einem Antriebsmittel, das im Betriebsfall den Sitzversteller antreibt, wobei zwischen dem Sitzversteller und dem Antriebsmittel eine Überlastsicherung angeordnet ist, die im Überlastfall die Übertragung eines zu hohen Drehmomentes von dem Antriebsmittel auf den Sitzversteller verhindert.

Die vorliegende Erfindung betrifft einen Fahrzeugsitz, der insbesondere in einem Kraftfahrzeug angeordnet ist. Bei dem Fahrzeugsitz kann es sich um einen Fahrer oder Beifahrersitz aber auch um einen Sitz, der im rückwärtigen Bereich des Fahrzeugs angeordnet ist, handeln. Der erfindungsgemäße Fahrzeugsitz kann einer oder mehreren Personen Platz bieten. Es kann sich demnach bei dem erfindungsgemäßen Fahrzeugsitz auch um eine Sitzbank handeln.

Dieser Fahrzeugsitz weist ein Sitzteil und eine Rückenlehne und mindestens einen Sitzversteller auf, der die Lage der Rückenlehne zu dem Sitzteil und/oder die Lage des Sitzteils und/oder der Rückenlehne relativ zur Karosserie ändert. Insbesondere handelt es sich bei dem Sitzversteller um eine Höhenverstellung des Sitzteils des Fahrzeugsitzes.

Der Sitzversteller weist nun ein Antriebsmittel beispielsweise ein motorisches oder ein manuelles Antriebsmittel insbesondere einen Hebel auf, mit dem der Sitzversteller angetrieben wird.

Erfindungsgemäß ist nun zwischen dem Sitzversteller und dem Antriebsmittel eine Überlastsicherung angeordnet die im Überlastfall die Übertragung einer zu hohen Kraft und/oder eines zu hohen Drehmomentes von dem Antriebsmittel auf den Sitzversteller verhindert. "Zwischen" im Sinne der Erfindung kann zum einen eine Wirkverbindung aber auch eine räumliche Anordnung bedeuten. Mit der Überlastsicherung wird verhindert, dass ein zu hohes Drehmoment und/oder eine zu hohe Kraft von dem Antriebsmittel auf das Verstellmittel übertragen wird. Gleichzeitig wird mit der Überlastsicherung aber auch verhindert, dass sich ein Fahrzeuginsasse, der auf dem erfindungsgemäßen Fahrzeugsitz sitzt, an dem Antriebsmittel beispielsweise dem Hebel verletzt.

Vorzugsweise wird das Antriebsmittel in einem Überlastfall aus seiner Betriebs- in eine Überlaststellung, die sich vorzugsweise zumindest teilweise weiter entfernt von dem Fahrzeuginsassen befindet, überführt. Besonders bevorzugt rotiert das Antriebsmittel im Überlastfall von dem Sitzinsassen weg, insbesondere in Richtung des Fahrzeugbodens. Sobald die Überlastsituation nicht mehr vorhanden ist kann das Antriebsmittel mit einer entsprechenden Rückstellkraft wieder in seine Betriebsstellung überführt werden. Die Rückstellkraft kann manuell, motorisch oder beispielsweise als Federkraft vorliegen.

Erfindungsgemäß handelt es sich bei der Überlastsicherung um zwei im Betriebsfall formschlüssig zusammenwirkende Mittel. Besondere bevorzugt ist ein Mittel einer Ausnehmung oder Einbuchtung und das andere Mittel eine Ausbuchtung.

Erfindungsgemäß sind beide Mittel zumindest teilweise kegelförmig oder kegelstumpfförmig ausgebildet ist. Alternativ kann mindestens ein Mittel auch keilförmig ausgebildet sein.

Erfindungsgemäß ändert sich der Keilbeziehungsweise Kegelwinkel entlang der Längsachse des Kegels beziehungsweise Keils. Dadurch ist eine Keilwinkel gesteuerte Ent- bzw. Einkopplung zwischen dem Antriebsmittel und dem Verstellmittel möglich. Sobald eine gewisse Überlastkraft beziehungsweise ein gewisses Überlastmoment vorhanden ist, entkoppelt sich das Antriebsmittel von dem Verstellmittel. Durch die unterschiedlichen Winkel kann dieser Entkopplungsvorgang beschleunigt bzw. abgebremst werden.

Erfindungsgemäß wirken die beiden Mittel rastend zusammen. Erfindungsgemäß ist mindestens ein Mittel elastisch gelagert, wobei es im Betriebsfall vergleichsweise gering vorgespannt und im Überlastfall vergleichsweise stark in Richtung des anderen Mittels vorgespannt ist. Dadurch nehmen die beiden Mittel ihre formschlüssige Verbindung selbsttätig, d.h. rastend, ein, sobald das Antriebsmittel von der Überlast in die Betriebsstellung zurückgeführt worden ist.

Vorzugsweise ist zwischen dem Sitzversteller und dem Antriebsmittel ein Element, beispielsweise eine Platte, angeordnet. Diese Platte ist vorzugsweise drehfest mit dem Sitzversteller oder mit dem Antriebsmittel verbunden und weist besonders bevorzugt ein Formschlussmittel auf, dass entweder mit dem Sitzversteller oder mit dem Antriebsmittel als Überlastsicherung zusammenwirkt.

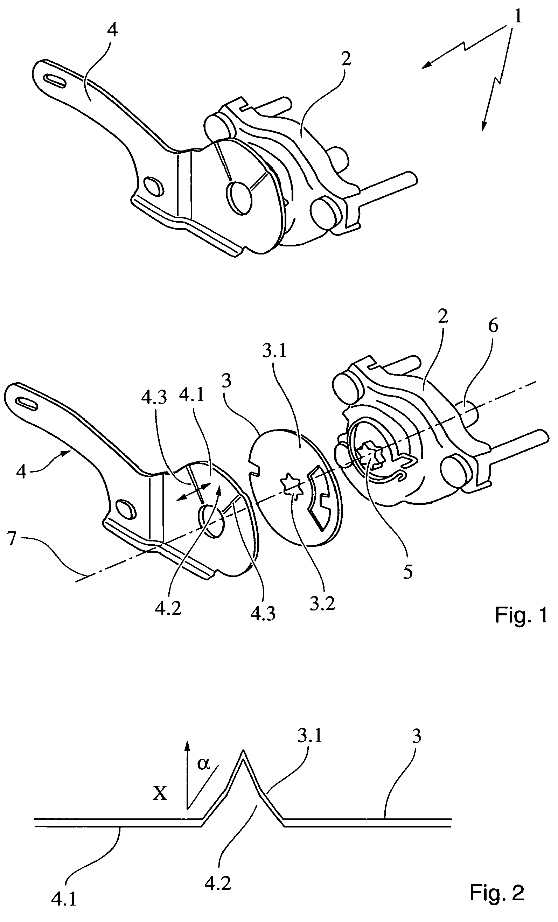

Im Folgenden wird die Erfindung anhand der Figuren 1 und 2 erläutert.
Figur 1 zeigt den Sitzversteller.
Figur 2 zeigt die Formschlussmittel 3.1 und 4.2 im Betriebszustand.

Figur 1 zeigt den Sitzversteller in zwei Ansichten, wobei es sich bei der oberen Ansicht um eine zusammengebaute Darstellung und bei der unteren Ansicht um eine Explosionsdarstellung handelt. Der Sitzversteller ist Teil eines Fahrzeugsitzes mit einem Sitzteil und einer Rückenlehne. In dem vorliegenden Fall handelt es sich bei dem Sitzversteller um einen Sitzteilhöhenversteller. Dieser Sitzversteller 1 weist ein Gehäuse 2 auf, in dem sich in der Regel Getriebeelemente befinden. Dieses Gehäuse weist antriebsseitig beispielsweise ein Zahnrad und abtriebsseitig beispielsweise ebenfalls ein Zahnrad oder eine Welle auf, das/die mit der eigentlichen Verstellmimik des Sitzverstellers des Fahrzeugsitzes verbunden ist. Drehfest mit dem Zahnrad 5 ist eine Platte 3, hier eine Adapterplatte, verbunden, die zwischen dem Gehäuse des Sitzverstellers und dem Antriebsmittel 4, hier ein Hebel, angeordnet ist. Die drehfeste Verbindung zwischen dem Zahnrad 5 und der Platte 3 erfolgt über die Ausnehmung 3.2, die beispielsweise eine zahnförmige Umfangskontur aufweist. An der Platte 3 ist desweiteren ein Formschlussmittel 3.1, hier eine vorzugsweise tiefgezogene Einbuchtung, insbesondere eine kegelförmige Einbuchtung, angeordnet. Der Hebelarm 4 ist drehbar um die Längsmittelachse 7 des Zahnrades 5 jedoch nicht drehfest mit diesem angeordnet. Der Hebel 4 weist ein elastisches Segment 4.1 auf, an dem ein, vorzugsweise tiefgezogenes Formschlussmittel 4.2 hier eine Ausbuchtung angeordnet ist, das eine zu dem Formschlussmittel 3.1 komplementäre Form aufweist. Der Hebel 4 ist in dem vorliegenden Fall zumindest in dem Bereich des Segmentes 4.1 aus einem elastischen Material gefertigt, das die Einschnitte 4.2 aufweist. Dadurch entsteht ein elastisches Sement, das in die durch den Pfeil dargestellte Richtung elastisch ausgelenkt werden kann. Die Ausbuchtung 4.2 greift im Betriebsfall zumindest teilweise formschlüssig in die Einbuchtung 3.1 der Platte ein, so dass eine Kraft oder ein Drehmoment von dem Hebel 4 auf die Platte 3 übertragbar ist. Um den Sitzversteller 1 zu verstellen wird ein Drehmoment von dem Hebel 4 auf die Adapterplatte 3 übertragen, die dieses Drehmoment wiederum an das Zahnrad 5 überträgt. Im Falle einer Überlast wird das elastische Element 4.1, wie durch den Pfeil dargestellt, nach außen gebogen. Dadurch bzw. dabei springt das Formschlussmittel 4.2 aus dem Formschlussmittel 3.1 heraus und das Antriebsmittel 4 kann sich unabhängig von der Adapterplatte 3 drehen. Dadurch wird kein Drehmoment von dem Hebel 4 auf das Zahnrad 5 übertragen. Dies hat den Vorteil, dass zum einen keine zu hohen Drehmomente auf das Zahnrad 5 übertragen werden, aber auch das Hebel 4 kein starres Hindernis darstellt, an dem sich ein Fahrzeuginsasse verletzten kann. Sobald die Überlastsituation vorbei ist, kann der Hebel 4 in seine Betriebsstellung, in der die Formschlussmittel 4.2, 3.1 wieder miteinander formschlüssig im Eingriff stehen, zurückgedreht werden und der Sitzversteller ist ohne den Einsatz von Werkzeugen wieder betriebsbereit.

Figur 2 zeigt Details der Formschlussmittel 3.1 beziehungswese 4.2. Diese sind, wie in Figur 2 zu sehen, kegel- oder keilförmig gestaltet, wobei sich der Keilwinkel α mit der Längskoordinate x der Formschlussmittel verändert. Dadurch ist eine kegelwinkelgesteuerte Verrastung beziehungsweise Entrastung der beiden Formschlussmittel 3.1, 4.2 möglich. Sobald eine gewisse Hemmkraft beziehungsweise ein gewisses Hemmdrehmoment überwunden sind, geraten die beiden Formschlussmittel 3.1, 4.2 vergleichsweise leicht außer Eingriff bzw. rasten vergleichsweise leicht wieder ein.

### Bezugszeichenliste

- 1: Sitzversteller, Höhenversteller
- 2: Gehäuse
- 3: Element, Platte
- 3.1: Formschlussmittel
- 3.2: Ausnehmung für das Zahnrad 5
- 4: Antriebsmittel, Hebel
- 4.1: elastisches Mittel, elastisches Segment
- 4.2: Formschlussmittel
- 5: Zahnrad
- 6: Zahnrad, Welle
- 7: Längssachse, Drehachse

## Patentansprüche

1. Fahrzeugsitz mit einem Sitzversteller (1) und einem Antriebsmittel (4), das im Betriebsfall den Sitzversteller (4) antreibt, wobei zwischen dem Sitzversteller (1) und dem Antriebsmittel (4) eine Überlastsicherung (3.1, 4.1, 4.2) angeordnet ist, die im Überlastfall die Übertragung eines zu hohen Drehmomentes von dem Antriebsmittel (4) auf den Sitzversteller (1) verhindert, **dadurch gekennzeichnet, dass** die Überlastsicherung zwei im Betriebsfall formschlüssig zusammenwirkende Mittel (3.1, 4.2) sind, wobei eines der zwei Mittel (4.2) elastisch gelagert ist, dass die Mittel (3.1, 4.2) zumindest teilweise kegelförmig oder kegelstumpfförmig ausgebildet sind, wobei sich der Kegelwinkel (α) mit seiner Längsachse (x) verändert, wodurch eine kegelwinkelgesteuerte Verrastung beziehungsweise Entrastung der Mittel (3.1, 4.2) erfolgt, wobei im Überlastfall das Antriebsmittel von einer Betriebs- in eine Überlaststellung reversibel überführbar ist.

2. Fahrzeugsitz nach Anspruch 1, **dadurch gekennzeichnet, dass** das eine Mittel eine Ausnehmung (3.1) und das andere Mittel (4.2) eine Ausbuchtung ist, wobei die Ausnehmung (3.1) im Betriebsfall formschlüssig mit der Ausbuchtung (4.2) zusammenwirkt.

3. Fahrzeugsitz nach einem der voranstehenden Ansprüche, **dadurch gekennzeichnet, dass** zwischen dem Sitzversteller (1) und dem Antriebsmittel (4) ein Element (3), beispielsweise eine Platte, vorgesehen ist.

4. Fahrzeugsitz nach Anspruch 3, **dadurch gekennzeichnet, dass** das Element (3) drehfest mit dem Sitzversteller verbunden ist.

5. Fahrzeugsitz nach einem der Ansprüche 3 oder 4, **dadurch gekennzeichnet, dass** das Element (3) das eine Mittel (3.1) aufweist.

## Claims

1. Vehicle seat comprising a seat adjuster (1) and a driving means (4) which, in the event of operation, drives the seat adjuster (4), wherein an overload protection (3.1, 4.1, 4.2) is arranged between the seat adjuster (1) and the driving means (4), said overload protection preventing the transmission of an excessive torque from the driving means (4) to the seat adjuster (1) in the event of an overload, **characterized in that** the overload protection is formed by two means (3.1, 4.2) which interact in a form-fitting manner in the event of operation, wherein one of the two means (4.2) is mounted elastically, **in that** the means (3.1, 4.2) are at least partially of conical or frustoconical design, wherein the cone angle (α) changes with the longitudinal axis (x) thereof, as a result of which the means (3.1, 4.2) are latched or unlatched in a manner controlled by the cone angle, wherein, in the event of an overload, the driving means is reversibly transferable from an operating position into an overload position.

2. Vehicle seat according to Claim 1, **characterized in that** the one means is a recess (3.1) and the other means (4.2) is a protuberance, wherein the recess (3.1) interacts in a form-fitting manner with the protuberance (4.2) in the event of operation.

3. Vehicle seat according to either of the preceding claims, **characterized in that** an element (3), for example a plate, is provided between the seat adjuster (1) and the driving means (4).

4. Vehicle seat according to Claim 3, **characterized in that** the element (3) is connected to the seat adjuster for rotation thereof.

5. Vehicle seat according to either of Claims 3 and 4, **characterized in that** the element (3) has the one means (3.1).

## Revendications

1. Siège de véhicule comprenant un dispositif de réglage de siège (1) et un moyen d'entraînement (4) qui, en fonctionnement, entraîne le dispositif de réglage de siège (4), une protection contre les surcharges (3.1, 4.1, 4.2) étant disposée entre le dispositif de réglage de siège (1) et le moyen d'entraînement (4), laquelle, en cas de surcharge, empêche le transfert d'un couple trop élevé du moyen d'entraînement (4) au dispositif de réglage de siège (1), **caractérisé en ce que** la protection contre les surcharges est constituée par deux moyens (3.1, 4.2) coopérant en fonctionnement par engagement par correspondance de formes, l'un des deux moyens (4.2) étant supporté élastiquement, **en ce que** les moyens (3.1, 4.2) sont réalisés au moins en partie sous forme conique ou tronconique, l'angle de conicité (α) variant avec son axe longitudinal (x), de sorte qu'un encliquetage ou un désencliquetage, commandé par l'angle de conicité, des moyens (3.1, 4.2) ait lieu, le moyen d'entraînement, en cas de surcharge, pouvant être transféré de manière réversible d'une position de fonctionnement dans une position de surcharge.

2. Siège de véhicule selon la revendication 1, **caractérisé en ce que** l'un des moyens est un évidement (3.1) et l'autre moyen (4.2) est un renflement, l'évidement (3.1), en fonctionnement, coopérant par engagement par correspondance de formes avec le renflement (4.2).

3. Siège de véhicule selon l'une quelconque des revendications précédentes, **caractérisé en ce qu'**entre le dispositif de réglage de siège (1) et le moyen d'entraînement (4) est prévu un élément (3), par exemple une plaque.

4. Siège de véhicule selon la revendication 3, **caractérisé en ce que** l'élément (3) est connecté de manière solidaire en rotation avec le dispositif de réglage de siège.

5. Siège de véhicule selon l'une quelconque des revendications 3 ou 4, **caractérisé en ce que** l'élément (3) présente l'un des moyens (3.1).
